# FASCICULE DE BREVET EUROPEEN

(11) **EP 3 057 903 B1**
(45) Date de publication et mention de la délivrance du brevet: **05.12.2018**
(21) Numéro de dépôt: 14802091.0
(22) Date de dépôt: 16.10.2014
(51) Int. Cl.: B66F 3/46, H04W 24/08, H04W 72/04, H04W 72/08

(54) **PROCÉDÉ DE RADIOCOMMUNICATION ENTRE COLONNES D'UN PONT DE LEVAGE ET PONT DE LEVAGE ASSOCIÉ**
VERFAHREN ZUR FUNKKOMMUNIKATION ZWISCHEN SÄULEN EINER HEBEBÜHNE UND ENTSPRECHENDE HEBEBÜHNE
METHOD OF RADIO COMMUNICATION BETWEEN COLUMNS OF A LIFT AND ASSOCIATED LIFT

(30) Priorité: 18.10.2013 FR 1360182
(43) Date de publication de la demande: 24.08.2016
(73) Titulaire: Sefac, 08800 Montherme (FR)
(72) Inventeur: WEISS, Daniel, 57100 Thionville (FR)
(74) Mandataire: Littolff, Denis
(86) Numéro de dépôt international: PCT/FR2014/052639
(87) Numéro de publication internationale: WO 2015/055959

(56) Documents cités:
- US-A1- 2013 240 300

## Description

La présente invention concerne le domaine de la synchronisation d'un ensemble d'équipements. Elle concerne plus particulièrement un système de levage d'un véhicule, composé par exemple de 2 à 8 colonnes autonomes alimentées par batterie, et qui doivent effectuer le levage synchronisé de la charge.

L'ordre de levage qui est donné sur une des colonnes doit être transmis à l'ensemble des colonnes composant le pont. Pendant la phase de levage la vitesse de chaque colonne doit être contrôlée et doit pouvoir être adaptée pour assurer la fonction d'isonivelage : à chaque instant chaque colonne du pont doit se trouver au même niveau que toutes les autres.

De plus tout défaut survenant sur une des colonnes ou un arrêt d'urgence actionné doit arrêter le levage immédiatement.

Le fonctionnement du pont repose sur la communication entre les colonnes.

Les échanges comportent trois types d'informations transmises:
1. Des modifications de configuration et de paramétrage,
2. Des commandes de levage synchronisé,
3. Des défauts et la commande d'arrêt d'urgence.

Les informations de type 2 et surtout de type 3 exigent des transmissions rapides effectuées dans des délais garantis.

La mise hors service d'une colonne doit arrêter ou interdire toutes les opérations de levage de toutes les colonnes dans un délai très court. Cet événement ne peut être détecté que par une absence de la colonne dans le protocole de communication.

Plusieurs ponts doivent pouvoir être constitués et utilisés dans un même lieu et à faible distance les uns des autres sans dégradation des performances.

Plusieurs ponts de levage pouvant être utilisés dans un même endroit, ils doivent partager un environnement radioélectrique sans se perturber et sans dégradation des performances. Seul un système multicanaux permet de fournir un environnement dédié à chaque pont.

L'utilisateur doit pouvoir constituer un pont en prenant des colonnes disponibles dans l'atelier. L'allocation des canaux radios doit être effectuée de manière automatique et transparente pour l'utilisateur.

L'information d'arrêt d'urgence du système doit permettre l'arrêt rapide de toutes les colonnes d'un pont. Cette information doit être transmise de manière prioritaire et dans un délai maximum déterminé sur le réseau radio.

Les protocoles standards accèdent au média en mode « sans balise » par la méthode CSMA qui diffère la transmission si le canal est occupé. Dans ces protocoles l'accès au média se fait de manière non déterminée.

En mode balise, des intervalles de temps « slots » sont créés par le coordinateur et l'accès au média est alors déterministe pour les équipements « esclaves ».

Le document US 2004/0026180 divulgue une solution de synchronisation de plusieurs colonnes par communication sans fil, à l'aide d'un protocole de type maître / esclave.

Ce fonctionnement n'est pas admissible en phase d'exploitation car le protocole est dépendant d'une colonne, celle du coordinateur, qui est « maître ». La défaillance du coordinateur bloque tous les échanges, et il devient impossible d'arrêter les « esclaves ». Le document US 2013/240300 divulgue également un procédé qui repose sur une colonne assurant la coordination, fonctionnant en pratique avec une logique maître-esclave qui aboutit à la limitation précitée.

La défaillance d'une colonne ne devrait pas empêcher les échanges entre les colonnes restantes.

En outre, si les canaux sont tous occupés il est souhaitable de pouvoir réutiliser un canal déjà utilisé si l'éloignement des ponts est suffisant. Afin d'optimiser ce mécanisme les colonnes doivent utiliser la puissance d'émission juste nécessaire afin de réduire la portée au minimum pour permettre la réutilisation du canal si nécessaire.

Les fréquences et le protocole utilisé doivent de préférence être autorisés sur tous les continents.

Les protocoles radio standards tels que ZigBee, XBee, WLAN, WiFi, MiWi, Bluetooth... ne répondent pas aux besoins listés dans les paragraphes précédents. Le plus gros problème avec ces protocoles est qu'ils utilisent la détection de porteuse (CSMA) en mode sans balise comme méthode d'accès au média et ne permettent donc pas un accès déterministe au canal radio.

De plus, ces protocoles sont conçus pour répondre à la plupart des besoins et sont, pour les standards industriels comme ZigBee, adaptés à la collecte d'information sur des réseaux maillés, privilégiant l'acheminement par des mécanismes de routage par rapport aux aspects temps réels.

La présente invention a pour but de pallier au moins en partie à ces inconvénients. A cet effet, elle propose un procédé de radiocommunication entre colonnes d'un pont de levage pour constituer et exploiter un pont constitué d'au moins deux colonnes de levage sélectionnées dans un environnement comportant une pluralité de colonnes pouvant être utilisées pour la constitution et le fonctionnement simultané de plusieurs ponts en multicanal, les canaux radio étant sélectionnés dans une bande de fréquences prédéterminée, l'exploitation des ponts ainsi constitués ayant pour objet de synchroniser les colonnes au cours des opérations de levage et en cas de défaut dans au moins une colonne ou en cas d'arrêt d'urgence. Ce procédé comporte trois phases distinctes :
- à la mise sous tension, les colonnes scannent les émissions des canaux radio afin de détecter leur disponibilité et leur niveau de brouillage par des émissions externes ;
- une colonne sélectionnée en premier pour la constitution d'un pont, par affectation d'une clé entrée par l'opérateur et correspondant à un unique pont, sélectionne un canal libre, y crée une voie balise et la gère en mode radiodiffusion, permettant l'inscription d'au moins une autre colonne N à laquelle la même clé a été conférée, chaque colonne N (N≥2) s'inscrivant dans le premier créneau temporel disponible de la voie balise, toutes les colonnes ayant la même clé pouvant clore l'inscription, le pont étant alors constitué ;
- chaque colonne d'un pont constitué dialogue avec les autres en mode radiodiffusion au cours de l'exploitation dudit pont, la synchronisation des transmissions des trames contenant les données s'effectuant en conservant les créneaux temporels occupés pendant l'inscription, avec un poids égal pour toutes les colonnes.

Grâce à ces dispositions, le risque de défaillance non repérée devient significativement plus faible.

De préférence, la bande de fréquence choisie est comprise entre 2,4 et 2,5 GHz comportant une pluralité de canaux autorisés, numérotés d'une manière qui sera expliquée plus en détail dans la suite.

En réalité, le protocole de communication selon la présente invention est basé sur le modèle OSI à 7 couches, les couches de transport 4, de session 5 et de présentation 6 étant en l'occurrence regroupées en une unique couche de présentation entre les couches réseau 3 et application 7, ladite couche unique mettant en forme les données en vue de la gestion des colonnes.

Plus précisément encore, la sous-couche contrôle de la liaison logique de la couche de liaison 2 comprend trois modules actifs séparément, correspondant respectivement aux phases de scannage des canaux, d'inscription en vue de la constitution d'un pont et d'exploitation d'un pont constitué.

Le premier module, actif pendant la phase de scannage des canaux dès la mise sous tension d'une colonne, effectue une mesure de la puissance en réception des signaux reçus de chaque canal, identifie les trames transmises sur chaque canal et renseigne un tableau d'état des canaux. Ce tableau d'état des canaux mémorise des données sur :
- la possibilité d'utiliser chaque canal en fonction de la réglementation locale, l'information mémorisée correspondant à : autorisé ou interdit ;
- le type de trame transmise, l'information mémorisée correspondant à : trame d'inscription ou trame d'exploitation du pont ;
- le numéro de série de la clé assignée à chaque pont sur chaque canal ;
- le numéro de série de la colonne ; et
- le taux d'occupation de chaque canal, sous forme d'un pourcentage calculé après plusieurs dizaines de mesure.

Le second module, activé par la couche réseau 3 pendant la phase d'inscription des colonnes en vue de constituer un pont, désactive le premier module et recherche si un canal est en phase d'inscription avec la même clé, en vue de rejoindre ce canal pour inscrire la colonne si c'est le cas, ou de choisir le canal ayant le taux d'occupation le plus faible pour y créer une voie balise entamant une procédure d'inscription. Celle-ci est en fait basée sur un protocole dit à accès multiple à répartition dans le temps (TDMA), et comporte des créneaux temporels de durée prédéterminée utilisables comme suit :
- la colonne qui entame la procédure d'inscription s'affecte le numéro 0, les colonnes se présentant ensuite sur le canal s'affectant les numéros suivants par ordre d'arrivée et insérant leurs données dans les créneaux temporels correspondant à leur numéro d'ordre, le numéro du créneau disponible apparaissant dans le champ de données de la colonne 0 ;
- les colonnes insèrent leurs trames de présence cycliquement à chaque lancement des créneaux temporels par la colonne 0, lesdites trames étant remontées à la couche réseau 3.

Selon l'invention, la disparition de la trame de présence d'une colonne pendant N cycles consécutifs est traitée comme la désinscription de la colonne et la libération du créneau temporel correspondant. De même, l'absence de transmission de la part de la colonne 0 pendant une durée de N cycles entraîne la suppression du pont et la désinscription de toutes les colonnes de ce pont, puis la libération du canal correspondant et la remontée de l'information à la couche réseau 3, qui redonne le contrôle au second module.

Dans le procédé de l'invention, chaque trame de présence comporte le code de la phase inscription, le numéro de la colonne émettrice, le numéro de la clé affectée au pont, le numéro de série de la colonne 0, le nombre de colonnes inscrites et un tableau des indices de qualité contenant des données respectivement sur la puissance et la qualité de réception des signaux reçus des autres colonnes.

Le troisième module, activé par la couche réseau 3 lorsqu'une colonne est sélectionnée au moyen de la clé identifiant un pont, désactive le second module et gère les colonnes sur une base à accès multiple à répartition dans le temps (T-TDMA) avec « jeton » impliquant le passage de contrôle d'une colonne à l'autre du pont à chaque cycle. Toutes les colonnes gèrent les durées des créneaux temporels afin de respecter la durée du cycle même en cas de non réception de la trame de données d'exploitation d'une colonne, les affectations des créneaux temporels et leurs durées étant conservées. Les créneaux inutilisés sont supprimés.

En cas de défaillance de la colonne N, la colonne N+1 passe en émission à l'expiration de la durée du créneau temporel qui lui était affecté.

Selon une configuration possible, chaque trame de données d'exploitation comporte le code de la phase inscription, le numéro de la colonne émettrice, le numéro de la clé affectée au pont, le numéro de série de la colonne 0, le nombre de colonnes inscrites, le tableau des indices de qualité et des données opérationnelles pour faire fonctionner l'application particulière, à savoir le pont de levage.

Dans l'invention, la couche réseau 3 de chaque colonne mémorise le tableau des indices de qualité des trames réceptionnées et calcule un indice de qualité globale IQG de la réception et un indice de qualité IQP de la réception de ses trames telle que perçue par les autres colonnes. Cette couche réseau 3 calcule par ailleurs la puissance d'émission en vue d'obtenir un niveau déterminé par le plus faible des indices de qualité IQP.

La couche supérieure 4 de présentation unique transmet à/reçoit de la couche d'application 7 les informations suivantes :
- Un octet signalant l'état/l'activation de la colonne, qui peut prendre les valeurs : inactif/arrêt, scanning/commande du scanning, inscription/ commande de l'inscription, exploitation/commande de l'exploitation, et défaut radio (pour la réception uniquement) ;
- L'indice de qualité globale IQG, codé entre 0 et 4 (qualité maximale) ; et
- La longueur et les données de chaque trame.

Selon une possibilité choisie dans le cadre du procédé de l'invention, les créneaux temporels durent 1,5 ms, la durée des trames étant d'au plus 1 ms.

Enfin, l'invention concerne également un pont de levage, en particulier pour le levage de véhicules, comportant au moins deux colonnes de levage et des moyens de radiocommunication entre colonnes fonctionnant selon le procédé de radiocommunication développé ci-dessus.

L'avantage apporté par la présente invention réside principalement en ce que le procédé est parfaitement déterministe, et toute défaillance sur l'une quelconque des colonnes est perçue et gérée par les autres de manière quasi certaine.

La présente invention sera mieux comprise à la lecture de la description détaillée qui suit faite en référence aux figures annexées dans lesquelles :
- La figure 1 est un diagramme représentant les états d'une colonne ;
- La figure 2 est une représentation schématique d'un protocole de l'état de la technique ;
- La figure 3 est une représentation schématique d'un protocole selon l'invention ;
- La figure 4 est un schéma d'un module émetteur / récepteur pouvant servir à la mise en oeuvre de l'invention ;
- La figure 5 est une vue schématique d'une trame générée par le module de la figure 4 ;
- La figure 6 présente l'encapsulation des données émises par le module radio suivant la norme 802.15.4 ;
- La figure 7 présente l'extraction des données reçues par le module radio suivant la norme 802.15.4 ;
- La figure 8 illustre un exemple de mesures relevées par le module de la figure 4 ;
- La figure 9 illustre un exemple d'encodage par colonne ;

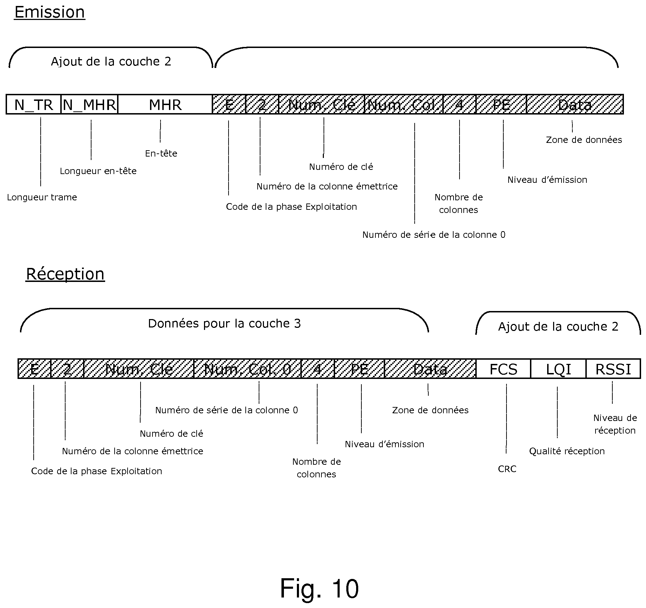

- La figure 10 illustre un exemple de prise en compte des échanges entre colonnes.

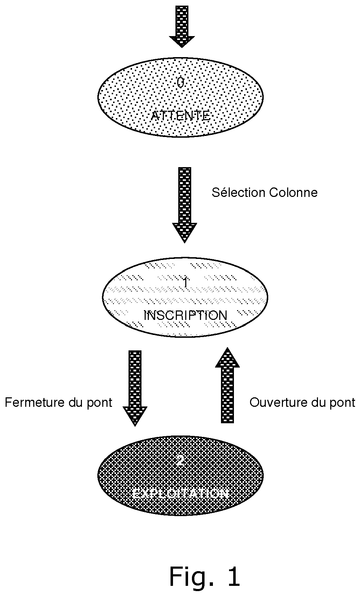

La fig. 1 représente les états d'une colonne de la mise sous tension jusqu'à l'exploitation.

Après la mise sous tension, la colonne est en attente de sélection pour constituer un pont.

La fermeture du pont clôt la phase d'inscription des colonnes du pont. Le pont est alors complet avec toutes les colonnes sélectionnées.

La phase d'exploitation correspond à l'utilisation du pont pour effectuer des opérations de levage.

L'ouverture du pont ne permet plus l'utilisation du pont mais il devient possible de recomposer un nouveau pont pour supprimer, changer ou rajouter une colonne.

Le protocole comprend lui aussi trois phases totalement séparées :

### Phase 0 = Phase de surveillance des canaux radio :

Pendant cette phase, les colonnes disponibles surveillent tous les canaux radio afin de détecter les canaux libres, les canaux déjà occupés par un pont et les canaux brouillés par des émissions externes.

Cette phase est silencieuse. Les colonnes ne passent pas en émission, elles se contentent d'écouter et d'évaluer la disponibilité et la qualité de tous les canaux radio.

### Phase 1 = Phase de constitution du pont :

Pendant cette phase, la première colonne sélectionnée choisit le canal libre ayant le niveau de bruit le plus faible. Elle crée alors une voie « balise » sur ce canal et la gère, afin de permettre l'inscription des autres colonnes dans ce pont. Chaque colonne présente sa demande d'inscription dans le premier slot libre du canal balise. Le gestionnaire de la voie « balise » autorise et enregistre les inscriptions des colonnes. Les slots sont attribués dans l'ordre d'arrivée des colonnes.

### Phase 2 = Phase d'exploitation du pont :

Lorsque toutes les colonnes sont présentes sur le canal opérationnel, n'importe quelle colonne peut fermer le pont. Elle transmet l'ordre de fermeture à toutes les autres colonnes qui confirment à leur tour le passage en phase d'exploitation.

Afin d'optimiser les temps de transmission, toutes les émissions sont entendues simultanément par toutes les colonnes du pont et se font en mode diffusion « Broadcast ».

La synchronisation des transmissions par les slots, créée en phase d'inscription, est maintenue pendant la phase d'exploitation. La notion de gestionnaire disparaît et toutes les colonnes ont le même poids dans le dialogue. Par contre les slots vides, qui existaient pour accueillir les nouvelles colonnes en phase d'inscription, sont supprimés.

Le protocole selon l'invention a été développé en respectant le modèle OSI de la norme ISO 7498 globalement intitulée « Modèle basique de référence pour l'interconnexion des systèmes ouverts (OSI, pour Open System Interconnection) »

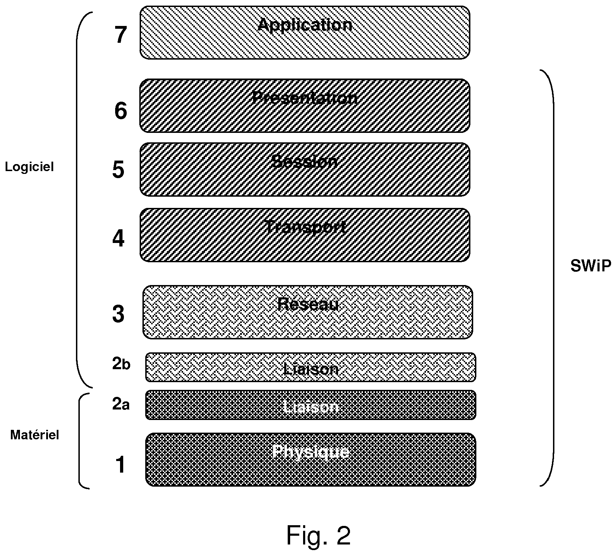

Ce modèle est basé sur 7 couches illustrées à la fig. 2

Cette architecture générale permet de décrire tous les types de protocoles.

Les couches décrites ont généralement les fonctions suivantes :
- Une couche Application, qui ne fait pas partie du protocole. C'est l'application du système.
- Deux couche Session et Présentation qui sont les couches d'interfaçage du protocole avec l'application.

La couche Présentation adapte la forme des données entre l'application et le protocole.

La couche Session permet de gérer des circuits virtuels avec différents modules de l'application et présente une interface unique avec le protocole.
- La couche Transport assure le transport de bout en bout entre l'expéditeur et le destinataire indépendamment du nombre de sauts intermédiaires réalisés par le routage.
- La couche réseau gère le chemin de transmission pour les sauts intermédiaire. Elle gère le routage des transmissions sur le réseau et les acquits de saut en saut.
- La couche liaison gère l'accès au média et s'assure que la transmission s'est effectuée sans erreur entre un émetteur et un récepteur par des mécanismes de détection d'erreurs.
- La couche physique, qui est la couche matérielle, et gère la transmission des bits sur le média.

Les protocoles tels que ZigBee sont conçus pour permettre à un nombre variable et non connu d'équipements de transmettre aléatoirement des données avec des acquits de transmission et en faisant des bonds à travers le réseau.

Les caractéristiques prioritaires dans ce cas sont de limiter la consommation énergétique des équipements et de trouver un chemin pour acheminer les données de l'expéditeur au destinataire final. La réduction du délai de transmission n'est pas l'objectif prioritaire.

Le protocole selon l'invention permet de transmettre rapidement un message de taille fixe entre un nombre d'équipements limité et connu, le tout sans acquit de transmission car le message est répété cycliquement.

On en déduit logiquement qu'il n'y a pas réellement de traitement de la couche Transport.

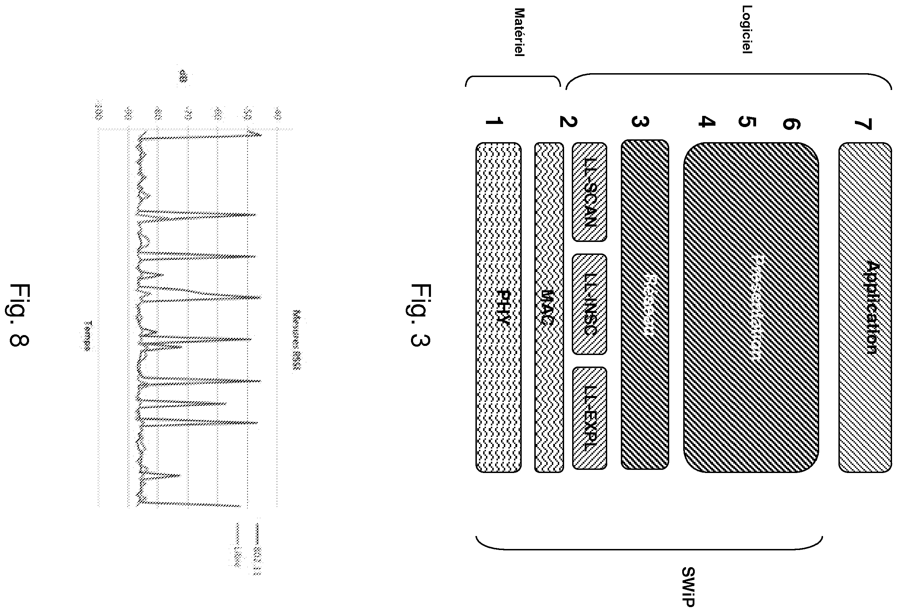

La fig. 3 illustre une représentation suivant un modèle Open System Interconnection (OSI) d'un protocole selon l'invention.

La couche physique (PHY) est chargée de la transmission effective des signaux électriques sur le support de communication. Elle est chargée de l'émission et la réception des bits de données. Son service consiste à s'assurer qu'un bit fourni par la couche mac de l'émetteur sera transmis correctement à la couche mac du récepteur.

Elle assure la synchronisation au niveau bit par l'ajout d'un préambule composé d'une séquence de bits prédéfinie et au niveau trame par un mot de synchronisation défini par une norme IEEE 802.

La couche physique est réalisée par un composant matériel dépendant du support de communication et en l'occurrence la bande de fréquence retenue.

Les critères de choix de la bande de fréquences sont les suivants :
- Le choix se portera de préférence sur une bande ISM (Industriel, Scientifique et Médical) dont l'utilisation des fréquences est libre sans licence.
- L'équipement de levage devant pouvoir être utilisé sur tous les continents, la bande choisie sera une bande autorisée par les diverses autorités de régulation (ETSI pour l'Europe, FCC pour les Etats Unis, etc...).
- La bande de fréquences devra de préférence permettre l'utilisation de plusieurs canaux.
- Le débit brut par canal sera élevé afin d'acheminer rapidement les informations urgentes.
- Le choix de la bande doit permettre la disponibilité de composants, émetteurs/récepteurs, de faible coût.

Un réseau possible constitué des colonnes est un réseau WPAN (Wireless Personal Area Network) répondant à la norme 802.15.4

Une bande préférée est celle de 2,4 à 2,5 GHz qui répond à tous les critères ci-dessus. Cette bande comprend 16 canaux numérotés de 11 à 26. En fonction des réglementations certains canaux peuvent être interdits ou la puissance d'émission limitée. Ces limitations seront traitées comme des paramètres par le protocole selon l'invention.

On peut utiliser par exemple un module émetteur/récepteur de la société Microchip. Le MRF24J40 intègre les couches 1 et 2 (PHY et MAC) du standard 802.15.4 et permet une configuration très étendue des modes de fonctionnement du composant.

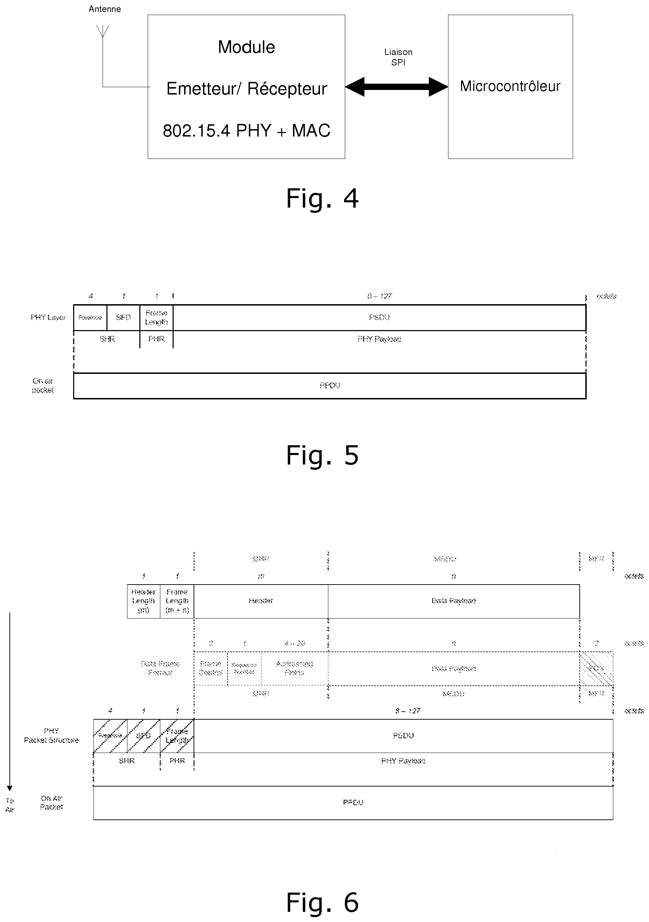

L'interfaçage avec le microcontrôleur hôte peut être réalisé par un bus SPI, comme illustré à la fig. 4.

Le format de la trame généré par la couche physique du module répond à la norme 802.15.4, et est illustré à la fig. 5.

Les fonctions de la couche MAC sont :
1. La mesure du niveau RSSI (Received Signal Strength Indication) et de la qualité du signal LQI (Level Quality Indicator) sur chaque transmission.
2. La composition des trames pour la couche 1
3. Le contrôle par CRC (Cyclic Redundancy Check) des erreurs dans la transmission d'une trame.
4. La gestion de l'adressage des trames.
5. La gestion de la méthode d'accès au réseau.

La couche MAC est traitée par le matériel.

Le module choisi MRF24J40M respecte pour la couche MAC les spécifications de la norme 802.15.4. Cette norme décrit les fonctionnalités qui sont les bases des protocoles de réseaux maillés utilisant le mode d'accès CSMA (Carrier Sense Multiple Access, ou mode à accès multiple avec détection de porteuse) ou le mode Balise.

Le niveau de bruit peut être mesuré sur un canal par une requête du logiciel de la couche mac. Une mesure automatique est également effectuée à chaque réception de trame. La valeur obtenue est proportionnelle au niveau en dBm (0dBm = 1mW sur 50Ω) du signal mesuré.

Le niveau de qualité est mesuré à chaque réception de données. Le LQI est remontée à la couche supérieure avec les données. La valeur de LQI est le résultat d'un calcul intégrant le niveau RSSI et le niveau du rapport signal sur bruit (SNR, pour Signal Noise Ratio).

### Transmission des données :

Les données fournies par la couche Réseau (MSDU pour Mac Service Data Unit) sont encapsulées avant d'être transférées vers la couche physique. Les données redondantes du CRC (FCS, pour Frame Check Sequence) sont ajoutées à la trame par la couche mac afin que la couche mac du récepteur puisse vérifier la validité des données (voir Fig. 6).

La couche mac ajoute l'en-tête MHR aux données ainsi que la taille des blocs MHR et MSDU.

### Réception des données :

La couche matérielle remonte avec les données le champ de contrôle FCS ainsi que le niveau RSSI et la qualité LQI du signal.

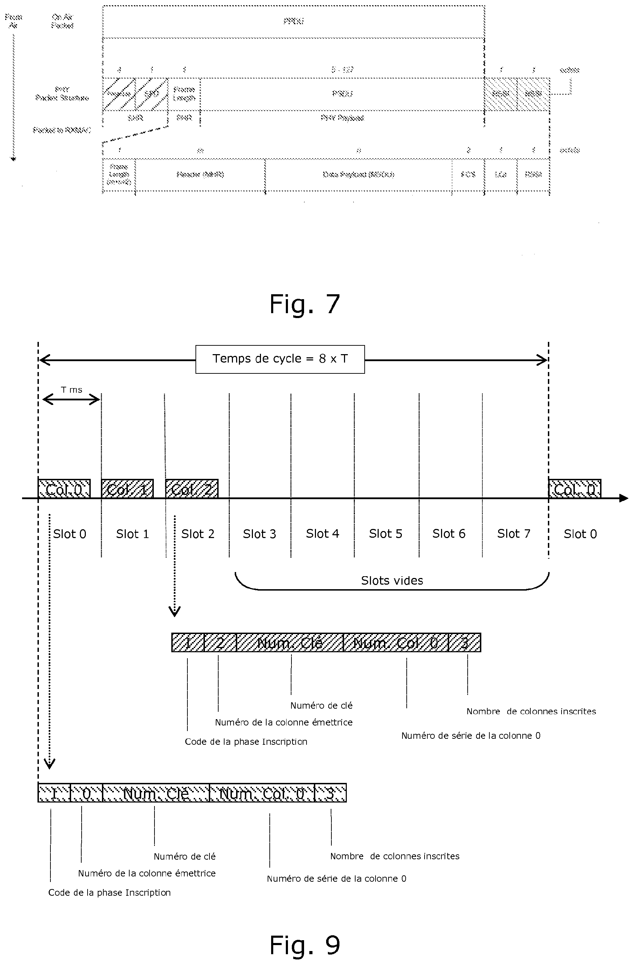

La couche logicielle ne recevra les données que si le contrôle du CRC (FCS) est correct (voir Fig. 7).

La transmission des trames se faisant en diffusion (« Broadcast »), il n'y a pas d'adressage spécifique d'une colonne. Les trames ne sont pas acquittées car réémises à chaque cycle donc l'adresse de l'expéditeur 802.15.4 des trames n'a pas d'importance.

La méthode d'accès au média CSMA-CA (CA pour Collision Avoidance, ou évitement de collision) ou mode « beacon » avec des slots gérés par l'équipement coordinateur correspond à la norme 802.15.4

Il est également possible de contrôler totalement l'accès au média en désactivant le CSMA-CA en mode non « beacon ».

Le module LL-SCAN est actif pendant la phase d'attente de la colonne.

Durant cette phase le dispositif selon l'invention scanne tous les canaux autorisés en mesurant le niveau RSSI sur chaque canal. Il écoute également les transmissions pour identifier les trames circulant sur chaque canal.

Le dispositif selon l'invention peut ainsi détecter les canaux sur lesquels un pont est en constitution ou en exploitation et la qualité de chaque canal inutilisé par le dispositif selon l'invention afin de pouvoir choisir le meilleur canal pour les autres états du protocole.

Il n'y a aucune transmission dans cet état, juste de l'écoute.

Cet état est créé à la mise sous tension de la colonne. Il est conservé jusqu'à la sélection de la colonne pour la constitution du pont.

LL-SCAN gère de façon autonome cette phase et complète le tableau d'état des canaux.

Exemple d'une série de mesures effectuées avec le composant MRF24J40.

La disponibilité du canal est évaluée, par la moyenne des valeurs de mesure (-90dBm à -35dBm) du niveau de bruit et par un taux d'occupation du canal (compris entre 0 et 100%) par rapport à un seuil de -60 dBm, sur une période de 25 mesures. Les résultats des mesures correspondant aux graphiques de la fig. 8 donnent 7% pour le canal libre et 26% pour celui occupé par des trames selon les normes IEEE 802.11. Cette valeur a pour seul but de pouvoir évaluer comparativement l'occupation des canaux d'une manière simple.

L'évaluation du taux d'occupation dure environ 500 ms pour les 16 canaux.

L'évaluation est réalisée sur tous les canaux marqués comme étant autorisés par la réglementation locale.

Si une transmission du dispositif selon l'invention est détectée sur le canal, LL-SCAN mémorise le type de trame (trame d'inscription ou trame d'exploitation), le numéro de série de la colonne qui a créé le pont et le numéro de la clé qui a été utilisée pour créer le pont. Le tableau est réactualisé à chaque cycle de mesure.

Exemple de structure du tableau des canaux :
Pour chaque canal :

| Libellé | Taille en octets | Valeurs possibles |
|---|---|---|
| Autorisé | 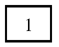 | 0 = Interdit, 1 = Autorisé |
| Etat | 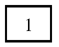 | 'I' = Inscription, 'E' = Exploitation, 0 = Libre |
| Numéro de clé | 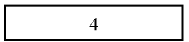 | Numéro de série de la clé |
| Numéro de colonne | 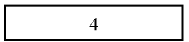 | Numéro de série de la colonne |
| Niveau de bruit | 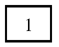 | RSSI (0 à 255) |
| Taux d'occupation | 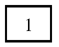 | % d'occupation du canal 0 à 1 00% |

Ce tableau sera utilisé par LL-INSC dans la phase de constitution du pont.

La couche LL-INSC est activée par la couche réseau lors de la sélection de la colonne avec la clé. L'activation de LL-INSC provoque la désactivation de LL-SCAN.

La couche LL-INSC recherche dans le tableau des canaux si un canal est déjà en phase d'inscription avec la même clé :
Si c'est le cas LL-INSC va rejoindre ce canal pour inscrire la colonne.

Sinon LL-INSC va choisir le canal ayant le taux d'occupation et le niveau RSSI le plus faible et créer le dialogue d'inscription sur ce canal.

### Description du protocole d'inscription.

Le dialogue d'inscription des colonnes est basé sur le protocole TDMA (Time Division Multiple Access) avec 8 slots. L'avantage du protocole TDMA est d'être parfaitement déterministe et d'optimiser le temps de réponse par la suppression des collisions et l'optimisation du débit sur le canal.

Les slots sont définis par la couche LL-INSC de la colonne ayant créé le dialogue qui s'affecte 0 comme numéro de colonne du pont. Le numéro de la colonne du pont correspond au numéro de slot (de 0 à 7) dans le protocole.

Chaque colonne se présentant sur le canal s'affecte le 1er numéro de slot disponible et insère ses données dans le slot correspondant. Le numéro de slot disponible est indiqué dans le champ de données de la colonne 0.

Durant cette phase les colonnes insèrent leur trame de présence cycliquement à chaque lancement des slots par la colonne 0. Les trames sont remontées à la couche réseau pendant cette phase.

La disparition de cette trame de présence, pour une colonne de 1 à 7, pendant N cycles consécutifs est traitée comme la désinscription de la colonne et la libération du slot correspondant.

L'absence de dialogue de la colonne 0 pendant une durée correspondant à N*8*T ms T pouvant prendre une valeur typiquement comprise entre 3 et 10ms, provoque la suppression du pont et la désinscription de fait de toutes les colonnes. Le canal est libéré dans la table des canaux de chaque colonne et l'information est remontée à la couche réseau qui redonne le contrôle à LL-INSC.

La fig. 9 illustre le format du dialogue.

Les fonctions complémentaires de collecte des informations de niveau et de qualité ainsi que l'ajustement automatique de la puissance émise sont activées dans la couche réseau et décrites ci-après.

La couche LL-EXPL est activée par la couche réseau lors de l'activation d'une colonne avec la clé. L'activation de LL-EXPL provoque la désactivation de la couche LL-INSC.

Le dialogue d'exploitation des colonnes est basé sur un protocole selon l'invention à n slots. Comme le protocole TDMA utilisé pendant la phase d'inscription, il s'agit d'un protocole avec des slots de durée constante affectés aux colonnes. L'avantage du protocole selon l'invention est de supprimer le rôle particulier de la colonne 0. Chaque colonne passe le contrôle à la colonne suivante (passage de jeton). Toutes les colonnes gèrent les temporisations des slots afin de respecter le cycle en cas de non réception de la trame d'une colonne. En cas de défaillance de la colonne N, la colonne N+1 passera en émission sur expiration de la temporisation de surveillance.

En quelque sorte, chaque colonne devient maitre à tour de rôle. Dans un fonctionnement maitre / esclave, le maitre sait parfaitement détecter la défaillance d'un esclave, mais la défaillance du maitre n'est pas détectée. En changeant de maitre, la défaillance du maitre sera détectée dès que la colonne suivante sera devenue maitre. Selon un mode particulier de réalisation de l'invention, deux colonnes distinctes sont maitres à tour de rôle, avec un changement de maitre environ toutes les 7,5 ms. Cette période de changement est telle qu'un retard d'arrêt du fait de la défaillance du maitre de 7,5 ms reste acceptable pour la sécurité du pont. On réduit ainsi très nettement la probabilité de défaillance non gérée : la probabilité que les deux colonnes, maitres à tour de rôle, soient défaillantes au même instant est très nettement plus faible que celle qu'une colonne maitre soit défaillante.

Selon un mode préféré de réalisation de l'invention, toutes les colonnes deviennent maitres à tour de rôle. Ainsi, tant que l'une des colonnes n'est pas défaillante, dans un délai maximum de N x 7,5 ms, elle sera maître et détectera les défaillances des autres colonnes. Si toutes les colonnes sont défaillantes au même instant, elles s'arrêtent de toute façon, et le pont s'arrête en situation stable. La sécurité est donc maximale.

La durée de 7,5ms est un exemple de valeur adaptée, des valeurs comme 3ms ou 10ms peuvent être utilisées également.

Dans ce type de protocole TDMA à jeton avec émission en diffusion, chaque colonne surveille les émissions des autres colonnes. La défaillance d'une colonne sera détectée par toutes les autres colonnes et provoquera l'arrêt du levage en situation stable après N défauts consécutifs détectés. La sécurité est donc maximale.

Comme pour le protocole LL-INSC l'avantage du protocole selon l'invention est d'être parfaitement déterministe et d'optimiser le temps de réponse par la suppression des collisions et l'optimisation du débit sur le canal même en cas de défaut de transmission de n'importe quelle colonne.

Les affectations des slots effectuées par le protocole LL-INSC sont conservées et les timings sont identiques.

Les slots vides sont supprimés puisque l'ajout de colonnes est maintenant interdit. Le temps de cycle est donc réduit en fonction du nombre de colonnes utilisées.

La fig. 9 illustre le format des trames obtenues.

La couche réseau reçoit les informations de la couche MAC. Elle en extrait et traite les informations de qualité et de niveau de signal et transfère les données utiles à la couche présentation. La couche réseau ne fait aucun traitement sur les données utiles.

Lors de la réception d'une trame la couche MAC matérielle ajoute le niveau RSSI et le niveau de qualité pour cette réception.

La couche réseau stocke toutes ces informations dans un tableau et en déduit un indice de qualité global IQG qu'elle remonte à la couche présentation afin que l'application puisse traiter cette information.

Chaque colonne indique dans sa trame émise son niveau d'émission. Les colonnes réceptrices reçoivent en plus de ces données le niveau avec lequel la trame a été reçue. Chaque colonne peut donc calculer l'atténuation du signal entre elle et la colonne émettrice

Afin de permettre de faire cohabiter deux ponts sur un même canal, en cas de besoin, la puissance doit être juste suffisante et sans excès pour une qualité de liaison correcte. La couche réseau ajuste la puissance d'émission pour obtenir un niveau minimum déterminé pour la liaison présentant l'atténuation la plus grande. Ce traitement est effectué pendant toute la durée de la phase d'exploitation.

Le rôle de la couche présentation est de mettre en forme les données venant de et à destination de l'application.

Pour la réception, le protocole selon l'invention transmet trois informations vers la couche application. Ces informations sont déposées dans des emplacements de mémoire globale.

Les informations sont :
- L'état du protocole (1 octet) = Status_SWiP qui prend les valeurs suivantes :
   ∘ 0 = Protocole Inactif
   ∘ 'S' = Phase Scanning
   ∘ 'I' = Phase Inscription
   ∘ 'E' = Phase Exploitation
   ∘ 'D' = Défaut radio
- L'indice de qualité global = IQG_SWiP qui prend les valeurs 0 à 4 (4 étant la qualité maximale)
- Les données utiles extraites des trames recues = DATA_REC_SWiP composées de :
   ∘ Longueur (1 octet)
   ∘ Données (80 octets maximum)

Pour l'émission, les données reçues de l'application sont :
- L'activation des phases du protocole selon l'invention par l'application (1 octet) qui peut prendre les valeurs suivantes :
   ∘ 0 = Arrêt du Protocole
   ∘ 'S' = Activation de la phase Scanning
   ∘ 'I' = Activation de la phase Inscription
   ∘ 'E' = Activation de la phase Exploitation
- Les données utiles de l'application composées de :
   ∘ Longueur (1 octet)
   ∘ Données (80 octets maximum)

Le protocole selon l'invention se démarque des protocoles connus par l'utilisation des mécanismes TDMA avec passage de témoin, qui lui donnent des performances élevées en termes de débit et de délai d'acheminement.

Le protocole selon l'invention est un protocole simple et robuste débarrassé des fonctions de routage inutiles pour le type d'application d'un pont pour véhicule.

Le protocole selon l'invention est totalement déterministe et adapté à la transmission des informations d'urgence.

Un avantage de ce protocole est de permettre grâce à son déterminisme très fort et à ses délais de transmission très courts la réalisation des automatismes de régulation en boucle fermée.

## Revendications

1. Procédé de radiocommunication entre colonnes d'un pont de levage pour constituer et exploiter un pont constitué d'au moins deux colonnes de levage sélectionnées dans un environnement comportant une pluralité de colonnes pouvant être utilisées pour la constitution et le fonctionnement simultané de plusieurs ponts en multicanal, les canaux radio étant sélectionnés dans une bande de fréquences prédéterminée, l'exploitation des ponts ainsi constitués ayant pour objet de synchroniser les colonnes au cours des opérations de levage et en cas de défaut dans au moins une colonne ou en cas d'arrêt d'urgence, qui comporte trois phases distinctes :
- à la mise sous tension, les colonnes scannent les émissions des canaux radio afin de détecter leur disponibilité et leur niveau de brouillage par des émissions externes ;
- une colonne sélectionnée en premier pour la constitution d'un pont, par affectation d'une clé entrée par l'opérateur et correspondant à un unique pont, sélectionne un canal libre, y crée une voie balise et la gère en mode radiodiffusion, permettant l'inscription d'au moins une autre colonne N à laquelle la même clé a été conférée, chaque colonne N (N≥2) s'inscrivant dans le premier créneau temporel disponible de la voie balise, toutes les colonnes ayant la même clé pouvant clore l'inscription, le pont étant alors constitué ;
- chaque colonne d'un pont constitué dialogue avec les autres en mode radiodiffusion au cours de l'exploitation dudit pont, la synchronisation des transmissions des trames contenant les données s'effectuant en conservant les créneaux temporels occupés pendant l'inscription, avec un poids égal pour toutes les colonnes.

2. Procédé de radiocommunication entre colonnes d'un pont de levage selon la revendication précédente, **caractérisé en ce que** la bande de fréquence est celle qui est comprise entre 2,4 et 2,5 GHz comportant une pluralité de canaux autorisés.

3. Procédé de radiocommunication entre colonnes d'un pont de levage selon l'une des revendications précédentes, **caractérisée en ce qu'**il est basé sur le modèle OSI à 7 couches, les couches de transport 4, de session 5 et de présentation 6 étant regroupées en une unique couche de présentation entre les couches réseau 3 et application 7, ladite couche unique mettant en forme les données en vue de la gestion des colonnes.

4. Procédé de radiocommunication entre colonnes d'un pont de levage selon la revendication précédente, **caractérisée en ce que** la sous-couche contrôle de la liaison logique de la couche de liaison 2 comprend trois modules (LL-SCAN ; LL-INSC ; LL-EXPL) actifs séparément, correspondant respectivement aux phases de scannage des canaux, d'inscription en vue de la constitution d'un pont et d'exploitation d'un pont constitué.

5. Procédé de radiocommunication entre colonnes d'un pont de levage selon la revendication précédente, **caractérisée en ce qu'**un premier module (LL-SCAN), actif pendant la phase de scannage des canaux dès la mise sous tension d'une colonne, effectue une mesure de la puissance en réception des signaux reçus de chaque canal, identifie les trames transmises sur chaque canal et renseigne un tableau d'état des canaux.

6. Procédé de radiocommunication entre colonnes d'un pont de levage selon la revendication précédente, **caractérisée en ce que** le tableau d'état des canaux mémorise des données sur :
- la possibilité d'utiliser chaque canal en fonction de la réglementation locale, l'information mémorisée correspondant à : autorisé ou interdit ;
- le type de trame transmise, l'information mémorisée correspondant à : trame d'inscription ou trame d'exploitation du pont ;
- le numéro de série de la clé assignée à chaque pont sur chaque canal ;
- le numéro de série de la colonne ; et
- le taux d'occupation de chaque canal, sous forme d'un pourcentage calculé après plusieurs dizaines de mesure.

7. Procédé de radiocommunication entre colonnes d'un pont de levage selon l'une des revendications 4 à 6, **caractérisée en ce qu'**un second module (LL-INSC), activé par la couche réseau 3 pendant la phase d'inscription des colonnes en vue de constituer un pont, désactive le premier module (LL-SCAN) et recherche si un canal est en phase d'inscription avec la même clé, en vue de rejoindre ce canal pour inscrire la colonne si c'est le cas, ou de choisir le canal ayant le taux d'occupation le plus faible pour y créer une voie balise entamant une procédure d'inscription.

8. Procédé de radiocommunication entre colonnes d'un pont de levage selon la revendication précédente, **caractérisée en ce que** la procédure d'inscription est basée sur le protocole dit à accès multiple à répartition dans le temps (TDMA) et comporte des créneaux temporels de durée prédéterminée utilisables comme suit :
- la colonne qui entame la procédure d'inscription s'affecte le numéro 0, les colonnes se présentant ensuite sur le canal s'affectant les numéros suivants par ordre d'arrivée et insérant leurs données dans les créneaux temporels correspondant à leur numéro d'ordre, le numéro du créneau disponible apparaissant dans le champ de données de la colonne 0 ;
- les colonnes insèrent leurs trames de présence cycliquement à chaque lancement des créneaux temporels par la colonne 0, lesdites trames étant remontées à la couche réseau 3.

9. Procédé de radiocommunication entre colonnes d'un pont de levage selon la revendication précédente, **caractérisée en ce que** la disparition de la trame de présence d'une colonne pendant N cycles consécutifs est traitée comme la désinscription de la colonne et la libération du créneau temporel correspondant.

10. Procédé de radiocommunication entre colonnes d'un pont de levage selon l'une des revendications 8 et 9, **caractérisée en ce que** l'absence de transmission de la part de la colonne 0 pendant une durée de N cycles entraîne la suppression du pont et la désinscription de toutes les colonnes de ce pont, puis la libération du canal correspondant et la remontée de l'information à la couche réseau 3, qui redonne le contrôle au second module (LL-SCAN).

11. Procédé de radiocommunication entre colonnes d'un pont de levage selon l'une des revendications 7 à 10, **caractérisée en ce que** chaque trame de présence comporte le code de la phase inscription, le numéro de la colonne émettrice, le numéro de la clé affectée au pont, le numéro de série de la colonne 0, le nombre de colonnes inscrites et un tableau des indices de qualité contenant des données respectivement sur la puissance et la qualité de réception des signaux reçus des autres colonnes.

12. Procédé de radiocommunication entre colonnes d'un pont de levage selon l'une des revendications 4 à 11, **caractérisée en ce qu'**un troisième module (LL-EXPL), activé par la couche réseau 3 lorsqu'une colonne est sélectionnée au moyen de la clé identifiant un pont, désactive le second module (LL-INSC) et gère les colonnes sur une base à accès multiple à répartition dans le temps (T-TDMA) avec « jeton » impliquant le passage de contrôle d'une colonne à l'autre du pont à chaque cycle, toutes les colonnes gérant les durées des créneaux temporels afin de respecter la durée du cycle même en cas de non réception de la trame de données d'exploitation d'une colonne, les affectations des créneaux temporels et leurs durées étant conservées, les créneaux inutilisés étant supprimés.

13. Procédé de radiocommunication entre colonnes d'un pont de levage selon la revendication précédente, **caractérisée en ce que**, en cas de défaillance de la colonne N, la colonne N+1 passe en émission à l'expiration de la durée du créneau temporel qui lui était affecté.

14. Procédé de radiocommunication entre colonnes d'un pont de levage selon l'une des revendications 12 et 13, **caractérisée en ce que** chaque trame de données d'exploitation comporte le code de la phase inscription, le numéro de la colonne émettrice, le numéro de la clé affectée au pont, le numéro de série de la colonne 0, le nombre de colonnes inscrites, le tableau des indices de qualité et des données opérationnelles.

15. Procédé de radiocommunication entre colonnes d'un pont de levage selon l'une des revendications 11 à 14, **caractérisée en ce que** la couche réseau 3 de chaque colonne mémorise le tableau des indices de qualité des trames réceptionnées et calcule un indice de qualité globale IQG de la réception et un indice de qualité IQP de la réception de ses trames telle que perçue par les autres colonnes.

16. Procédé de radiocommunication entre colonnes d'un pont de levage selon la revendication précédente, **caractérisée en ce que** la couche réseau 3 calcule la puissance d'émission en vue d'obtenir un niveau déterminé par le plus faible des indices de qualité IQP.

17. Procédé de radiocommunication entre colonnes d'un pont de levage selon l'une quelconque des revendications 3 à 16, **caractérisée en ce que** la couche de présentation unique transmet à/reçoit de la couche d'application 7 les informations suivantes :
- Un octet signalant l'état/l'activation de la colonne, qui peut prendre les valeurs : inactif/arrêt, scanning/commande du scanning, inscription/ commande de l'inscription, exploitation/commande de l'exploitation, et défaut radio (pour la réception uniquement) ;
- L'indice de qualité globale IQG, codé entre 0 et 4 (qualité maximale) ; et
- La longueur et les données de chaque trame.

18. Procédé de radiocommunication entre colonnes d'un pont de levage selon l'une quelconque des revendications précédentes, **caractérisée en ce que** les créneaux temporels durent 1,5 ms, la durée des trames étant d'au plus 1 ms.

19. Pont de levage, en particulier pour le levage de véhicules, comportant au moins deux colonnes de levage et des moyens de radiocommunication entre colonnes fonctionnant selon le procédé des revendications précédentes.

## Patentansprüche

1. Verfahren zur Funkkommunikation zwischen Säulen einer Hebebühne zur Bildung und Benutzung einer Hebebühne, die aus mindestens zwei Hubsäulen besteht, die aus einer Umgebung, die eine Mehrzahl zur gleichzeitigen Bildung und Bedienung mehrerer mehrkanaliger Bühnen verwendbare Säulen umfasst, ausgewählt sind, wobei die Funkkanäle aus einem vorgegebenen Frequenzband ausgewählt sind, wobei die Bedienung der derart ausgebildeten Hebebühnen die Säulen bei Hebevorgängen sowie bei Ausfall mindestens einer Säule oder bei Notbremsungen synchronisieren soll, wobei das Verfahren drei unterschiedliche Phasen umfasst:
- bei Anlegen von Spannung tasten die Säulen die Ausstrahlungen der Funkkanäle ab, um deren Verfügbarkeit und deren Störpegel infolge von externen Sendungen zu erkennen;
- eine Säule, die als erste zur Bildung einer Hebebühne ausgewählt wird, wählt durch Zuweisung eines vom Bediener eingegebenen Schlüssels, der einer einzigen Hebebühne entspricht, einen freien Kanal aus und erzeugt ein Markerband und verwaltet dieses im Rundfunkmodus, wodurch die Anmeldung mindestens einer anderen Säule N ermöglicht wird, der derselbe Schlüssel zugewiesen worden ist, wobei jede Säule N (N≥2) ins erste verfügbare Zeitsegment des Markerbands eingetragen wird, und wobei alle Säulen, die denselben Schlüssel aufweisen, die Anmeldung abschließen können, wobei dann die Hebebühne ausgebildet wird;
- jede Säule einer ausgebildeten Hebebühne kommuniziert im Rundfunkmodus mit den anderen über den Verlauf der Bedienung der Hebebühne, wobei die Synchronisation der die Daten enthaltenden Raster unter Beibehaltung der bei der Anmeldung belegten Zeitsegmente erfolgt und alle Säulen gleich gewichtet werden.

2. Verfahren zur Funkkommunikation zwischen Säulen einer Hebebühne nach dem vorigen Anspruch, **dadurch gekennzeichnet, dass** das Frequenzband zwischen 2,4 und 2,5 GHz liegt und eine Mehrzahl zugelassener Kanäle umfasst.

3. Verfahren zur Funkkommunikation zwischen Säulen einer Hebebühne nach einem der vorstehenden Ansprüche, **dadurch gekennzeichnet, dass** es auf dem 7-schichtigen OSI-Modell basiert, wobei die Transportschicht 4, Sitzungsschicht 5 und Präsentationsschicht 6 in einer einzigen Präsentationsschicht zwischen der Netzwerkschicht 3 und der Anwendungsschicht 7 zusammengefasst sind, wobei die einzige Schicht die Daten in Form bringt, um die Säulen verwalten zu können.

4. Verfahren zur Funkkommunikation zwischen Säulen einer Hebebühne nach dem vorigen Anspruch, **dadurch gekennzeichnet, dass** die Steuerungs-Unterschicht der Logikverbindung der Verbindungsschicht 2 drei getrennt funktionierende Module (LL-SCAN; LL-INSC; LL-EXPL) umfasst, die jeweils der Abtastung der Kanäle, der Anmeldung zur Ausbildung einer Hebebühne und der Bedienung einer ausgebildeten Hebebühne entsprechen.

5. Verfahren zur Funkkommunikation zwischen Säulen einer Hebebühne nach dem vorigen Anspruch, **dadurch gekennzeichnet, dass** ein erstes Modul (LL-SCAN), das in der Phase der Abtastung der Kanäle im Anschluss an das Anlegen von Strom auf eine Säule aktiv ist, eine Messung der empfangsseitigen Stärke der von jedem Kanal empfangenen Signale vornimmt, die auf jedem Kanal gesendeten Raster identifiziert und eine Statustabelle der Kanäle abfragt.

6. Verfahren zur Funkkommunikation zwischen Säulen einer Hebebühne nach dem vorigen Anspruch, **dadurch gekennzeichnet, dass** die Statustabelle der Kanäle Daten speichert über:
- die Nutzbarkeit jedes Kanals nach den örtlichen Rechtsvorschriften, wobei die gespeicherten Daten "erlaubt" oder "verboten" entsprechen;
- die Art des gesendeten Rasters, wobei die gespeicherten Daten lauten: Bühnenanmelde- oder Bühnenbedienungsraster;
- die Seriennummer des jeder Hebebühne auf jedem Kanal zugewiesenen Schlüssels;
- die Seriennummer der Säule und
- den Belegungsgrad jedes Kanals in Form eines im Anschluss an mehrere Dutzend Messvorgänge berechneten Prozentsatzes.

7. Verfahren zur Funkkommunikation zwischen Säulen einer Hebebühne nach einem der Ansprüche 4 - 6, **dadurch gekennzeichnet, dass** ein zweites Modul (LL-INSC), das von der Netzschicht 3 bei der Anmeldung der Säulen zur Bildung einer Hebebühne aktiviert wird, das erste Modul (LL-SCAN) deaktiviert und ermittelt, ob sich ein Kanal in der Anmeldephase mit demselben Schlüssel befindet, um diesen Kanal zu erreichen und bejahendenfalls die Säule anzumelden, oder den Kanal mit dem geringsten Belegungsgrad auszuwählen, um dort ein Markerband zu erzeugen, das einen Anmeldevorgang in Gang setzt.

8. Verfahren zur Funkkommunikation zwischen Säulen einer Hebebühne nach dem vorigen Anspruch, **dadurch gekennzeichnet, dass** der Anmeldeprozess auf dem TDMA-Protokoll basiert und Zeitsegmente vorgegebener Dauer umfasst, die wie folgt verwendbar sind:
- der Säule, die den Anmeldevorgang in Gang setzt, wird die Kennzahl 0 zugewiesen; den Säulen, die sich anschließend beim Kanal melden, in Ankunftsreihenfolge die darauf folgenden Kennzahlen zugewiesen werden und deren Daten in die ihrer jeweiligen Kennzahl entsprechenden Zeitsegmente eingefügt werden, wobei die Kennzahl des verfügbaren Zeitsegments im Datenfeld der Säule 0 erscheint;
- die Säulen fügen ihre Anwesenheitsraster bei jedem Start der Zeitsegmente durch die Säule 0 zyklisch ein, wobei die Raster wieder der Netzschicht 3 zugeführt werden.

9. Verfahren zur Funkkommunikation zwischen Säulen einer Hebebühne nach dem vorigen Anspruch, **dadurch gekennzeichnet, dass** das Verschwinden des Anwesenheitsrasters einer Säule über N aufeinander folgende Zyklen als Abmeldung der Säule und die Freigabe des entsprechenden Zeitsegments angesehen wird.

10. Verfahren zur Funkkommunikation zwischen Säulen einer Hebebühne nach einem der Ansprüche 8 und 9, **dadurch gekennzeichnet, dass** das Nichtvorhandensein einer Sendung seitens der Säule 0 über eine Dauer von N Zyklen die Löschung der Hebebühne und die Abmeldung aller Säulen dieser Hebebühne, gefolgt durch die Freigabe des entsprechenden Kanals und die Rücksendung der Daten an die Netzschicht 3, die die Steuerung wieder auf das zweite Modul (LL-SCAN) überträgt, zur Folge hat.

11. Verfahren zur Funkkommunikation zwischen Säulen einer Hebebühne nach einem der Ansprüche 7 - 10, **dadurch gekennzeichnet, dass** jedes Anwesenheitsraster umfasst: den Code der Anmeldephase, die Kennzahl der absendenden Säule, die Kennzahl des der Hebebühne zugewiesenen Schlüssels, die Seriennummer der Säule 0, die Anzahl der angemeldeten Säulen und eine tabellarische Aufstellung der Qualitätsindizes, die Daten über Leistung bzw. Empfangsqualität der von den anderen Säulen empfangenen Signale enthält.

12. Verfahren zur Funkkommunikation zwischen Säulen einer Hebebühne nach einem der Ansprüche 4 - 11, **dadurch gekennzeichnet, dass** ein drittes Modul (LL-EXPL), das durch bei Auswahl einer Säule mittels des Kennzeichnungsschlüssels einer Hebebühne die Netzschicht 3 aktiviert wird, das zweite Modul (LL-INSC) deaktiviert und die Säulen auf T-TDMA-Basis mit einem Token verwaltet, das den Übergang der Steuerung von einer Säule der Hebebühne auf die andere in jedem Zyklus kennzeichnet, wobei alle Säulen die Dauern der Zeitsegmente derart verwalten, dass die Dauer des Zyklus selbst beachtet wird, falls das Raster mit den Bedienungsdaten einer Säule nicht empfangen wird, wobei die Zuweisung und Dauer der Zeitsegmente beibehalten und die nicht genutzten Zeitsegmente gelöscht werden.

13. Verfahren zur Funkkommunikation zwischen Säulen einer Hebebühne nach dem vorigen Anspruch, **dadurch gekennzeichnet, dass** bei Ausfall der Säule N, die Säule N+1 zum Ablauf der Dauer des ihr zugewiesenen Zeitsegments in den Sendemodus übergeht.

14. Verfahren zur Funkkommunikation zwischen Säulen einer Hebebühne nach einem der Ansprüche 12 und 13, **dadurch gekennzeichnet, dass** jedes Raster mit Bedienungsdaten umfasst: den Code der Anmeldephase, die Kennzahl der absendenden Säule, die Kennzahl des der Hebebühne zugewiesenen Schlüssels, die Seriennummer der Säule 0, die Anzahl der angemeldeten Säulen und die tabellarische Aufstellung der Qualitätsindizes und der Bedienungsdaten.

15. Verfahren zur Funkkommunikation zwischen Säulen einer Hebebühne nach einem der Ansprüche 11 - 14, **dadurch gekennzeichnet, dass** die Netzschicht 3 jeder Säule die tabellarische Aufstellung der Qualitätsindizes der Empfangsraster speichert und einen globalen Qualitätsindex IQG des Empfangs und einen Qualitätsindex IQP des Empfangs ihrer Raster aus der Sicht der anderen Säulen berechnet.

16. Verfahren zur Funkkommunikation zwischen Säulen einer Hebebühne nach dem vorigen Anspruch, **dadurch gekennzeichnet, dass** die Netzschicht 3 die Empfangsleistung berechnet, um ein bestimmtes Niveau für den niedrigsten der Qualitätsindizes IQP zu erhalten.

17. Verfahren zur Funkkommunikation zwischen Säulen einer Hebebühne nach einem der Ansprüche 3 - 16, **dadurch gekennzeichnet, dass** die einzige Präsentationsschicht folgende Daten an die Anwendungsschicht 7 sendet bzw. von dieser empfängt:
- ein Byte, aus dem der Zustand/die Aktivation der Säule hervorgeht, das folgende Werte annehmen kann: inaktiv/gestoppt, Abtastung/Abtastbefehl, Anmeldung/Anmeldebefehl, Bedienung/Bedienungsbefehl, und Funkausfall (nur für den Empfang);
- den mit 0 - 4 (maximale Qualität) bezifferten globalen Qualitätsindex und
- die Länge der Daten jedes Rasters.

18. Verfahren zur Funkkommunikation zwischen Säulen einer Hebebühne nach einem der vorstehenden Ansprüche, **dadurch gekennzeichnet, dass** die Zeitsegmente 1,5 ms dauern, wobei die Raster höchstens 1 ms dauern.

19. Hebebühne, insbesondere zum Heben von Fahrzeugen, umfassend mindestens zwei Hubsäulen und Mittel zur Funkkommunikation zwischen Säulen, die das Verfahren nach einem der vorstehenden Ansprüche ausführen.

## Claims

1. Method of multichannel radiocommunication between the columns of a vehicle column lift to constitute and operate a lift consisting of at least two selected lifting columns in an environment comprising a plurality of columns that may be simultaneously used for the constitution and operation of several lifts, wherein the radio channels are selected in a predetermined frequency band, wherein the aim of the operation of the lifts thus constituted is to synchronize the columns during lifting operations and, in the event of failure in at least one column, or in the event of an emergency stop, there are three distinct phases:
- upon power up, the columns scan the radio channel emissions to detect their availability and their level of interference by external emissions;
- a column first selected for the constitution of a lift, by assignment of a code entered by the operator and corresponding to a single lift, selects a free channel, creates a beacon channel and manages it in broadcasting mode, allowing the registration of at least one other column N to which the same code has been conferred, wherein each column N (N≥2) belonging to the first available time slot of the beacon channel, wherein all the columns having the same code are able to close the registration as the lift is then constituted;
- each column of a lift forms a dialogue with the other columns in broadcasting mode during the operation of the lift, wherein the synchronization of the transmissions of the frames containing the data take place while keeping the time slots occupied during the registration, with equal weight for all the columns.

2. Method of radiocommunication between the columns of a vehicle column lift according to the preceding claim, **characterized in that** the frequency band is between 2.4 and 2.5 GHz and comprises a plurality of authorized channels.

3. Method of radiocommunication between the columns of a vehicle column lift according to one of the preceding claims, **characterized in that** it is based on the 7-layer OSI model, wherein the transport 4, session 5 and presentation 6 layers are grouped into a single presentation layer between the network layer 3 and the application layer 7, wherein the single layer formats the data to manage the columns.

4. Method of radiocommunication between the columns of a vehicle column lift according to the preceding claim, **characterized in that** the control sublayer of the logical link of the link layer 2 comprises three modules (LL-SCAN; LL-INSC; LL -EXPL) that are separately active, and respectively correspond to the phases of channel scanning, registration for the constitution of a lift and operation of a lift thus constituted.

5. Method of radiocommunication between the columns of a vehicle column lift according to the preceding claim, **characterized in that** a first module (LL-SCAN) that is active during the scanning phase of the channels from the power up of a column, performs a measurement of the power upon reception of the signals received from each channel, identifies the frames transmitted on each channel, and provides a status table of the channels.

6. Radiocommunication method between the columns of a vehicle column lift according to the preceding claim, **characterized in that** the channel status table stores data on:
- the possibility of using each channel according to local regulations, wherein the stored information corresponds to: authorized or forbidden information;
- the type of frame transmitted, the stored information corresponding to: the registration frame or operating frame of the lift;
- the serial number of the code assigned to each lift on each channel;
- the serial number of the column; and
- the occupancy rate of each channel, in the form of a percentage calculated after several dozen measurements.

7. Method of radiocommunication between the columns of a vehicle column lift according to one of the claims 4 to 6, **characterized in that** a second module (LL-INSC) that is activated by the network layer 3 during the registration phase of the columns in order to constitute a lift, disables the first module (LL-SCAN) and determines whether a channel is in registration phase with the same code in order to join this channel to register the column if this is the case, or choose the channel with the lowest occupancy rate to create a beacon channel that begins a registration process.

8. Method of radiocommunication between the columns of a vehicle column lift according to the preceding claim, **characterized in that** the registration procedure is based on the so-called time division multiple access protocol (TDMA) and comprises time slots of predetermined duration that are may be used as follows:
- the column which starts the registration procedure takes the number 0, the columns then appearing on the channel take the following numbers in order of arrival, and insert their data in the time slots corresponding to their order number, wherein the number of the available slot appears in the data field of column 0;
- the columns insert their presence frames cyclically at each launch of the time slots by the column 0, wherein the frames are raised to the network layer 3.

9. Method of radiocommunication between the columns of a vehicle column lift according to the preceding claim, **characterized in that** the disappearance of the presence of a column for N consecutive cycles is treated as unregistering the column, and the release of the corresponding time slot.

10. Method of radiocommunication between the columns of a vehicle column lift according to one of the claims 8 and 9, **characterized in that** the absence of transmission from the column 0 for a period of N cycles causes the elimination of the lift and the deregistration of all the columns of this lift, then the freeing of the corresponding channel and the feedback of information to the network layer 3, which gives back control to the second module (LL-SCAN).

11. Method of radiocommunication between the columns of a vehicle column lift according to one of the claims 7 to 10, **characterized in that** each frame of presence comprises the code of the registration phase, the number of the transmitting column, the number of the code assigned to the lift, the serial number of column 0, the number of columns registered, and a table of quality indices containing data respectively on the power and quality of reception of the signals received from the other columns.

12. Method for radiocommunication between the columns of a vehicle column lift according to one of the claims 4 to 11, **characterized in that** a third module (LL-EXPL) that is activated by the network layer 3 when a column is selected by means of the code identifying a lift, disables the second module (LL-INSC) and manages the columns on a time-division multiple access (T-TDMA) base with a "token" implying the transfer of control from one column to the other of the lift at each cycle, wherein all the columns manage the durations of the time slots in order to respect the duration of the cycle even in the event of non-reception of the data frame of exploitation of a column, wherein the assignments of the time slots and their durations is maintained, while the unused slots are eliminated.

13. Method for radiocommunication between the columns of a vehicle column lift according to the preceding claim, **characterized in that**, in the event of failure of the column N, the column N+1 passes into transmission at the end of the duration of the time slot which was assigned to it.

14. Method of radiocommunication between the columns of a vehicle column lift according to one of the claims 12 and 13, **characterized in that** each operating data frame comprises the code of the registration phase, the number of the transmitting column, the number of the code assigned to the lift, the serial number of column 0, the number of columns registered, the table of quality indices, and operational data.

15. Method for radiocommunication between the columns of a vehicle column lift according to one of the claims 11 to 14, **characterized in that** the network layer 3 of each column stores the table of quality indices of the received frames and calculates a global quality index IQG of the reception and a quality index IQP of the reception of its frames as perceived by the other columns.

16. Method for radiocommunication between the columns of a vehicle column lift according to the preceding claim, **characterized in that** the network layer 3 calculates the transmission power in order to obtain a level determined by the lowest of the quality indices IQP.

17. Method of radiocommunication between the columns of a vehicle column lift according to any one of the claims 3 to 16, **characterized in that** the single presentation layer transmits to/receives from the application layer 7, the following information:
- a byte indicating the state/activation of the column, which may take the values: inactive/stop, scan/control of the scan, registration/control of the registration, operation/control of the operation, and radio defect (for reception only);
- the global quality index IQG coded between 0 and 4 (maximum quality); and
- the length and data of each frame.

18. Method for radiocommunication between the columns of a vehicle column lift according to any one of the preceding claims, **characterized in that** the time slots last 1.5 ms, while the duration of the frames is at most 1 ms.

19. Column lift, in particular for lifting vehicles, comprising at least two lifting columns and means for radiocommunication between columns operating according to the method of the preceding claims.
